# EUROPÄISCHE PATENTSCHRIFT

(11) **EP 3 842 787 B1**
(45) Veröffentlichungstag und Bekanntmachung des Hinweises auf die Patenterteilung: **26.04.2023**
(21) Anmeldenummer: 19219289.6
(22) Anmeldetag: 23.12.2019
(51) Int. Cl.: G01N 21/27, G01N 21/359, G01J 3/02, G01J 3/28, G06N 20/10, G06V 10/143, G06V 10/32, G06V 10/77, G01N 21/84

(54) **SPEKTRALSENSOR**
SPECTRAL SENSOR
CAPTEUR SPECTRAL

(43) Veröffentlichungstag der Anmeldung: 30.06.2021
(73) Patentinhaber: SICK AG, 79183 Waldkirch (DE)
(72) Erfinder: Albrecht, Roland, 79211 Denzlingen (DE); Eble, Johannes, 79183 Waldkirch (DE)
(74) Vertreter: Manitz Finsterwald Patent- und Rechtsanwaltspartnerschaft mbB

(56) Entgegenhaltungen:
- CN-A- 104 502 309
- US-A1- 2018 313 804
- SERRANTI SILVIA ET AL: "Hyperspectral-imaging-based techniques applied to wheat kernels characterization", SENSING FOR AGRICULTURE AND FOOD QUALITY AND SAFETY IV, SPIE, 1000 20TH ST. BELLINGHAM WA 98225-6705 USA, Bd. 8369, Nr. 1, 11. Mai 2012 (2012-05-11) , Seiten 1-13, XP060002602, DOI: 10.1117/12.918559 [gefunden am 2012-05-09]
- LI JIANGBO ET AL: "Fast detection and visualization of early decay in citrus using Vis-NIR hyperspectral imaging", COMPUTERS AND ELECTRONICS IN AGRICULTURE, ELSEVIER, AMSTERDAM, NL, Bd. 127, 27. Juli 2016 (2016-07-27), Seiten 582-592, XP029709564, ISSN: 0168-1699, DOI: 10.1016/J.COMPAG.2016.07.016

## Beschreibung

Die vorliegende Erfindung betrifft einen Spektralsensor für die Nahinfrarotspektroskopie, welcher zur Unterscheidung und/oder Erkennung von Objekten und/oder Materialien dient. Ein gattungsgemäßer Spektralsensor ist der Art nach im Wesentlichen aus dem Artikel von SERRANTI SILVIA ET AL. mit dem Titel "Hyperspectral-imaging-based techniques applied to wheat kernels characterization" (Sensing for Agriculture and Food Quality and Safety, Proc. of SPIE VOL. 8369, 83690T) bekannt. Bezüglich des weitergehenden Standes der Technik sei an dieser Stelle auf den Artikel von LI JIANGBO ET AL. mit dem Titel "Fast detection and visualization of early decay in citrus uisng Vis-NIR hyperspectral imaging" (Computers and Electronics in Agriculture 127 (2016) 582-592) sowie auf die Druckschriften CN 104 502 309 A und US 2018/313804 A1 verwiesen.

Spektralsensoren, d.h. beispielsweise Spektroskope oder Spektrometer, können eingesetzt werden um Objekte und/oder Materialien anhand ihrer spektralen Eigenschaften zu erkennen. So unterscheiden sich üblicherweise Materialien in den von ihnen absorbierten Wellenlängen und können auf diese Weise voneinander unterschieden werden. Dies wird beispielsweise auch in Industrieprozessen eingesetzt, um Objekte zu unterscheiden bzw. anhand ihres Materials zu erkennen. Hierbei werden häufig Spektralsensoren verwendet, die im Nahinfrarotbereich (NIR) arbeiten, d.h. bei Wellenlängen z.B. im Bereich zwischen 800 und 2500 nm.

Insbesondere im industriellen Bereich ist die Geschwindigkeit der Sensoren entscheidend, wobei möglichst schnell ein Ergebnis vorliegen soll, welches Objekt oder Material gerade von dem Sensor erfasst wird. Zudem muss im industriellen Bereich die Integration des Spektralsensors möglichst schnell und mit geringem Aufwand in bestehende Prozesse erfolgen können.

Es ist daher die der Erfindung zugrunde liegende Aufgabe, einen Spektralsensor anzugeben, welcher gut für industrielle Prozesse geeignet ist.

Diese Aufgabe wird durch einen Spektralsensor mit den Merkmalen des Anspruchs 1 gelöst.

Insbesondere ist der Spektralsensor ausgebildet, in einem Lernmodus und in einem Betriebsmodus zu arbeiten. In dem Lernmodus führt der Spektralsensor ein oder mehrere Messungen von Intensitätswerten eines ersten Spektrums von Wellenlängen (Stützpunkte) durch. Im Betriebsmodus hingegen führt der Spektralsensor zumindest eine Messung von Intensitätswerten eines zweiten Spektrums von Wellenlängen durch, wobei das zweite Spektrum vollständig in dem ersten Spektrum enthalten ist, aber weniger Wellenlängen (Stützpunkte) umfasst als das erste Spektrum. Zudem ist der Spektralsensor ausgebildet, selbst die Wellenlängen des zweiten Spektrums zu bestimmen.

Eine Messung bei einer Wellenlänge kann auch als Stützpunkt bezeichnet werden. Im Betriebsmodus werden für das zweite Spektrum insbesondere weniger Stützpunkte erzeugt oder gemessen als für das erste Spektrum im Lernmodus.

Im Lernmodus erfasst der Spektralsensor also deutlich mehr Informationen bei einer Messung, da im Lernmodus bei einer jeweiligen Messung ein größeres und/oder höher aufgelöstes Spektrum, d.h. das erste Spektrum, gemessen wird.

Im Lernmodus können beispielsweise jeweils mehrere Messungen von verschiedenen Objekten und/oder Materialien vorgenommen werden, welche später dann im Betriebsmodus auch unterschieden werden sollen. So können im Lernmodus beispielsweise fünf Messungen eines ersten Materials, anschließend fünf Messungen eines zweiten Materials usw. vorgenommen werden.

Anschließend kann der Spektralsensor aus den Messungen im Lernmodus dann die Wellenlängen bestimmen, die im Betriebsmodus noch gemessen werden sollen. Die so bestimmten Wellenlängen bilden das zweite Spektrum, wobei das zweite Spektrum insbesondere kein kontinuierliches Spektrum ist, sondern bevorzugt eine Reihe von einzelnen Wellenlängen umfasst (d.h. aus nicht äquidistanten Stützpunkten besteht). Dadurch, dass das zweite Spektrum weniger Wellenlängen umfasst als das erste Spektrum, kann die Messung eines Objekts im Betriebsmodus deutlich schneller erfolgen als im Lernmodus. Hierdurch kann wiederum der Durchsatz bei industriellen Anwendungen gesteigert werden. Es hat sich zudem herausgestellt, dass der Verzicht auf die Messung eines vollen Spektrums, wie dies beispielsweise im Lernmodus der Fall sein kann, nicht zu Einbußen in der Genauigkeit bei der Unterscheidung und/oder Erkennung von Objekten führt. Dies liegt daran, dass große Anteile des ersten Spektrums häufig keine relevanten Informationen über das Objekt bzw. das jeweilige Material besitzen.

Erfindungsgemäß ist der Spektralsensor ausgebildet, selbst die Wellenlängen des zweiten Spektrums zu bestimmen. Insbesondere kann der Spektralsensor die Wellenlängen des zweiten Spektrums vollständig selbst bestimmen und ist dementsprechend nicht auf externe Recheneinrichtungen oder dergleichen angewiesen. Hierdurch ist es beispielsweise möglich, den Spektralsensor bereits an seinem Einsatzort in einen Prozess zu integrieren und dann, ohne weitere Änderungen, zunächst den Lernmodus auszuführen und schließlich für den Produktivbetrieb in den Betriebsmodus zu wechseln. Die Integration in Industrieprozesse wird auf diese Weise stark vereinfacht.

Insbesondere ist der Spektralsensor ausgebildet, die Wellenlängen des zweiten Spektrums mittels einer ersten Hauptkomponentenanalyse der Messung des ersten Spektrums zu bestimmen. Es hat sich gezeigt, dass durch die Hauptkomponentenanalyse ein Großteil der Varianz und damit der Information der Messung des ersten Spektrums erhalten bleibt und die Hauptkomponentenanalyse es zudem ermöglicht, mit akzeptablem Rechenaufwand die relevanten Wellenlängen des ersten Spektrums zu ermitteln. Diese relevanten Wellenlängen bilden dann das zweite Spektrum.

Bei der Hauptkomponentenanalyse werden zwei Hauptkomponenten und die zugehörigen ersten und zweiten Ladungen berechnet. Es versteht sich, dass auch andere Anzahlen von Hauptkomponenten verwendet werden können. Die zu verwendende Anzahl wird bevorzugt derart bestimmt, dass die Summe der Varianz, welche durch die Hauptkomponenten "erklärbar" ist (d.h. die in den Hauptkomponenten enthaltene Information über die Varianz), einen vorbestimmten Schwellwert übersteigt. Der vorbestimmte Schwellwert kann z.B. 90% oder 95% sein.

Die Hauptkomponentenanalyse wird auch als Hauptachsentransformation oder Englisch Principal Component Analysis (PCA) bezeichnet.

Erfindungsgemäß ist der Spektralsensor ausgebildet, für jede Wellenlänge des ersten Spektrums eine Ladungsdifferenz als die Differenz der ersten und der zweiten Ladung derselben Wellenlänge zu berechnen. Bevorzugt wird der Betrag der Differenz berechnet, welcher im Folgenden ebenfalls als Ladungsdifferenz bezeichnet wird. Zudem ist der Spektralsensor ausgebildet, für das zweite Spektrum diejenigen Wellenlängen auszuwählen, welche die größte Ladungsdifferenz aufweisen. Es hat sich herausgestellt, dass eine große Ladungsdifferenz Wellenlängen auszeichnet, die besonders gut zur Unterscheidung der verschiedenen Materialien geeignet sind. Dementsprechend werden für das zweite Spektrum diejenigen Wellenlängen ausgewählt, welche die größte Ladungsdifferenz aufweisen. Hierzu ist der Spektralsensor ausgebildet,
(a) die Anzahl von auszuwählenden Wellenlängen festzulegen,
(b) bei der Auswahl der Wellenlängen für das zweite Spektrum zunächst die Wellenlängen mit der größten Ladungsdifferenz auszuwählen und anschließend Ladungsdifferenzen von benachbart zu der ausgewählten Wellenlänge liegenden Wellenlängen zu erniedrigen, und
(c) anschließend, basierend auf den veränderten, d.h. erniedrigten, Ladungsdifferenzen eine weitere Wellenlänge mit der dann größten Ladungsdifferenz auszuwählen und anschließend Ladungsdifferenzen von benachbart zu der weiteren ausgewählten Wellenlänge liegenden Wellenlängen zu erniedrigen.

Bei der Auswahl der Wellenlängen für das zweite Spektrum basierend auf der Ladungsdifferenz kann also iterativ vorgegangen werden, wobei nach jeder Auswahl einer Wellenlänge eine Reskalierung der übrigen Ladungsdifferenzen erfolgt. Dies dient dazu, dass nicht nur benachbarte Wellenlängen ausgewählt werden, sondern die Wellenlängen mit dem größten Informationsgehalt ausgewählt werden. Beim Erniedrigen der Ladungsdifferenzen werden z.B. Ladungsdifferenzen erniedrigt, die direkt benachbart zu der Ladungsdifferenz der ausgewählten Wellenlänge liegen. Insbesondere werden Ladungsdifferenzen, welche weiter entfernt liegen weniger erniedrigt. Zudem wird bevorzugt jede Ladungsdifferenz nur einmalig erniedrigt.

Alternativ kann die Bestimmung der Wellenlängen des zweiten Spektrums auch von einer externen Recheneinrichtung (z.B. Server) unterstützt werden, sodass der Spektralsensor nur einen Teil der für die Bestimmung der Wellenlängen des zweiten Spektrums notwendigen Rechenleistung zur Verfügung stellen muss.

Insbesondere umfasst der Spektralsensor selbst eine Recheneinrichtung, welche die für die Bestimmung der Wellenlängen des zweiten Spektrums notwendigen Schritte ausführt. Die Recheneinrichtung kann außerdem den Betrieb des Spektralsensors durchführen und insbesondere den Lernmodus und den Betriebsmodus ermöglichen.

Zudem kann der Spektralsensor einen Photosensor zur Erfassung der verschiedenen Wellenlängen des ersten und zweiten Spektrums aufweisen. Die Recheneinrichtung und der Photosensor können bevorzugt im selben Gehäuse angeordnet sein, wobei es sich bei dem Spektralsensor insbesondere um einen miniaturisierten Sensor für Industrieprozesse handeln kann. Eine maximale Abmessung des Spektralsensors in seiner größten Erstreckung in einer Raumrichtung kann beispielsweise bis zu 10 cm betragen. Innerhalb des Gehäuses kann die vollständige oder zumindest überwiegende Rechenleistung zur Auswahl der Wellenlängen des zweiten Spektrums erbracht werden.

Der Spektralsensor kann insbesondere ein Fabry-Pérot-Interferometer (FPI) umfassen. Alternativ oder zusätzlich kann der Spektralsensor ein Mehrkanalsystem und/oder ein Digital Micromirror Device (DMD) mit einem optischen Beugungsgitter umfassen. Der Spektralsensor kann tastend, im Durchlicht und/oder mit Reflektor betrieben werden. Der Spektralsensor kann insbesondere eine Lichtquelle oder mehrere Lichtquellen zur Beleuchtung des zu messenden Objekts und/oder Materials umfassen. Neben Spektren im Nahinfrarotbereich kann der Spektralsensor auch für den mittleren und fernen Infrarotbereich (MIR/FIR) oder auch für den sichtbaren Wellenlängenbereich ausgebildet sein.

Vorteilhafte Weiterbildungen der Erfindung sind der Beschreibung, den Unteransprüchen sowie den Figuren zu entnehmen.

Gemäß einer ersten Ausführungsform ist der Spektralsensor ausgebildet, im Lernmodus bekannte Objekte zu messen und aus den Messungen der bekannten Objekte das zweite Spektrum zu bestimmen. Der Spektralsensor kann insbesondere jeweils eine oder mehrere Messungen desselben Objekts (oder auch gleichartiger Objekte) durchführen. Im Lernmodus kann hierfür der gesamte spektrale Bereich gemessen werden, über welchen der Spektralsensor verfügt. Dieser gesamte spektrale Bereich wird in diesem Fall dann als erstes Spektrum bezeichnet.

Das erste Spektrum ist bevorzugt ein kontinuierliches Spektrum und kann sich beispielsweise von 1550-1950 nm erstrecken. Insbesondere kann der Spektralsensor ausgebildet sein, um beispielsweise einen Abstand zwischen zwei Messpunkten von 5 nm aufzuweisen und dementsprechend bei dem genannten Spektralbereich 81 Messpunkte aufzunehmen. Die spektrale Breite, über welche für jeden Messpunkt integriert wird, kann beispielsweise im Bereich von 13-16 nm liegen. Allgemein kann der Abstand zwischen zwei Messpunkten kleiner oder gleich 10 oder 5 nm sein. Die spektrale Breite kann zwischen 1 und 30 nm, bevorzugt zwischen 10 und 20 nm und besonders bevorzugt zwischen 13 und 16 nm, liegen.

Das zweite Spektrum wird aus den Messungen der bekannten Objekte bevorzugt derart bestimmt, dass eine Unterscheidung der bekannten Objekte möglichst gut realisiert wird, wie hierin noch genauer beschrieben.

Es soll darauf hingewiesen werden, dass hierin der einfacheren Lesbarkeit halber nicht immer von "Objekten und/oder Materialien" gesprochen wird. Es versteht sich, dass bei einer Erwähnung einer Messung oder Detektion eines Objekts auch immer die Messung oder Detektion eines Materials gemeint ist und andersherum.

Gemäß einer weiteren Ausführungsform ist der Spektralsensor ausgebildet, im Betriebsmodus mittels der Detektion des zweiten Spektrums unbekannte Objekte als eines der im Lernmodus gemessenen Objekte zu erkennen. Aufgrund der passenden Auswahl der Wellenlängen des zweiten Spektrums können dann im Betriebsmodus zunächst unbekannte Objekte erkannt werden. Es versteht sich, dass die unbekannten Objekte nicht exakt dieselben Objekte sind, die im Lernmodus dem Spektralsensor präsentiert wurden, sondern nur gleiche, ähnliche und/oder aus gleichem Material hergestellte Objekte sind. Beispielsweise können im Lernmodus dem Sensor zehn verschiedene Folien aus zehn verschiedenen Materialien präsentiert (und vom Spektralsensor gemessen) worden sein, wobei der Spektralsensor dann das zweite Spektrum derart auswählt, dass die zehn Folien möglichst gut voneinander unterschieden werden können. Im Betriebsmodus werden dem Spektralsensor dann weitere Folien präsentiert, die aus einem der zehn Materialien bestehen. Das Material dieser Folien kann dann von dem Spektralsensor mittels Messung im Betriebsmodus erkannt werden.

Gemäß einer weiteren Ausführungsform ist der Spektralsensor ausgebildet, für das erste Spektrum zumindest fünf Mal, bevorzugt zehn oder 50 Mal, mehr Wellenlängen zu detektieren, als für das zweite Spektrum. Auf diese Weise kann der Zeitaufwand für eine Messung im Betriebsmodus verglichen mit dem Lernmodus um den Faktor fünf, zehn oder 50 reduziert werden.

Gemäß einer weiteren Ausführungsform umfasst das zweite Spektrum lediglich zwischen drei und 15, bevorzugt zwischen vier und 10 verschiedene Wellenlängen. Die genannten Zahlenwerte gelten jeweils als eingeschlossen.

Eine Wellenlänge des ersten oder zweiten Spektrums ist so zu verstehen, dass der Spektralsensor für diese Wellenlänge als mittlere Wellenlänge eines Wellenlängenbereichs eine Messung durchführt.

Gemäß einer Ausführungsform ist der Spektralsensor ausgebildet, vor der ersten Hauptkomponentenanalyse eine Normalisierung der Intensitätswerte der Messungen des ersten Spektrums vorzunehmen. Die Normalisierung erfolgt insbesondere derart, dass der Mittelwert der Intensitätswerte jeweils einer einzelnen Messung über alle Wellenlängen "1" beträgt. Durch die Normalisierung wird der Vorteil erreicht, dass nach der Normalisierung nur noch relative Signalunterschiede betrachtet werden und Signalschwankungen, beispielsweise aufgrund von variierenden Messabständen, eliminiert werden.

Gemäß einer weiteren Ausführungsform ist der Spektralsensor ausgebildet, bei der ersten Hauptkomponentenanalyse Hauptkomponenten und die den Hauptkomponenten zugehörigen Ladungen zu berechnen. Eine Ladung ist jeweils zu einer gemessenen Wellenlänge zugehörig. Die Ladungen geben an, wie die einzelnen Wellenlängen gewichtet werden müssen, um die entsprechende erste bzw. zweite Hauptkomponente zu bestimmen. Es kann also der Intensitätswert für eine Wellenlänge jeweils mit der entsprechenden Ladung multipliziert werden, wobei das vorgenannte Produkt für sämtliche Wellenlängen aufsummiert wird, um die jeweilige Hauptkomponente zu erhalten.

Gemäß einer weiteren Ausführungsform ist der Spektralsensor ausgebildet, nach dem Auswählen der Wellenlängen auf den (ursprünglichen) Messwerten der ausgewählten Wellenlängen eine (weitere) Normalisierung vorzunehmen.

Gemäß einer weiteren Ausführungsform ist der Spektralsensor ausgebildet, nach der weiteren Normalisierung eine zweite Hauptkomponentenanalyse vorzunehmen, bei welcher für jede Messung im Lernmodus die Hauptkomponenten und die zugehörigen Ladungen ermittelt werden. Bei der zweiten Hauptkomponentenanalyse werden allerdings nur die Intensitätswerte der ausgewählten Wellenlängen berücksichtigt.

Gemäß einer weiteren Ausführungsform ist der Spektralsensor ausgebildet, die bei der zweiten Hauptkomponentenanalyse ermittelten Hauptkomponenten für Messungen desselben bekannten Objekts zu gruppieren und eine Einhüllende der jeweils gruppierten Hauptkomponenten zu bestimmen. Die Gruppierung und die Bestimmung der Einhüllenden kann grafisch beispielsweise als "Score Plot" veranschaulicht werden. Sind beispielsweise zwei Hauptkomponenten ermittelt worden, so können die ermittelten Hauptkomponenten für jede Messung in einem zweidimensionalen Koordinatensystem eingetragen werden. Wurden im Lernmodus beispielsweise mehrere Messungen für dasselbe Objekt durchgeführt, so schwanken die Messwerte in der Realität leicht, sodass sich ein Cluster oder eine Gruppe von nahe aneinander liegenden Punkten in dem Score Plot ergibt, welche zu demselben Objekt bzw. Material gehören. Für diese Gruppe kann dann eine Einhüllende definiert werden, dies kann bei einem zweidimensionalen Koordinatensystem z.B. ein Rechteck sein. Die Einhüllende kann aber auch beispielsweise eine konvexe Begrenzung haben und/oder dreidimensional oder auch höherdimensional sein.

Gemäß einer weiteren Ausführungsform ist der Spektralsensor ausgebildet, den Abstand der Einhüllenden für verschiedene Anzahlen von ausgewählten Wellenlängen zu berechnen. Bevorzugt wird die Anzahl von Wellenlängen für den Betriebsmodus verwendet, welche den größten Abstand der Einhüllenden voneinander liefert. Alternativ kann auch die Anzahl von Wellenlängen verwendet werden, bei welcher der minimale Abstand zwischen zwei beliebigen Einhüllenden maximal wird. Durch einen besonders großen Abstand der Einhüllenden kann eine besonders sichere und robuste Unterscheidung der verschiedenen Objekte im Betriebsmodus erreicht werden. Außerdem kann der Abstand der Einhüllenden mit der Standardabweichung der Hauptkomponenten skaliert werden, um die Streuung der gemessenen Intensitätswerte zu berücksichtigen.

Zur Festlegung der Anzahl der Wellenlängen des zweiten Spektrums können die oben erläuterten Schritte, insbesondere ab dem obigen Schritt (a), iterativ mehrmals durchlaufen werden, wobei nach der ersten Hauptkomponentenanalyse für die zweite Hauptkomponentenanalyse verschiedene Anzahlen von Wellenlängen festgelegt werden. Beispielsweise können alle Werte von vier bis zehn Wellenlängen durchprobiert werden, wobei dann das beste Ergebnis ausgewählt wird.

Gemäß einer weiteren Ausführungsform ist der Spektralsensor ausgebildet, die Einhüllenden, insbesondere die Einhüllenden mit dem größten Abstand, abzuspeichern und im Betriebsmodus dazu zu verwenden, ein unbekanntes Objekt zu erkennen.

Im Betriebsmodus werden, wie erwähnt, nur die ausgewählten Wellenlängen (d.h. die Wellenlängen des zweiten Spektrums) gemessen. Für diese Wellenlängen wird dann bevorzugt eine Normalisierung und anschließend die zweite Hauptkomponentenanalyse durchgeführt. Wird bei der Hauptkomponentenanalyse festgestellt, dass die ermittelten Hauptkomponenten innerhalb einer Einhüllenden liegen, so gilt ein Objekt und/oder Material als erkannt. Der Spektralsensor kann dann beispielsweise über eine Datenschnittstelle das erkannte Objekt und/oder Material ausgeben.

Gemäß einer weiteren Ausführungsform ist der Spektralsensor ausgebildet, die Wellenlängen des zweiten Spektrums unter Zuhilfenahme eines Maschinenlernverfahrens auszuwählen. Das Maschinenlernverfahren kann zusätzlich oder alternativ zu den oben genannten Schritten im Zusammenhang mit der Hauptkomponentenanalyse verwendet werden. Als Maschinenlernverfahren kann beispielsweise eine Support Vector Maschine (SVM) eingesetzt werden, da eine solche SVM relativ wenige Trainingsdaten benötigt, um die verschiedenen Objekte bzw. Materialien voneinander zu unterscheiden.

Gemäß einer weiteren Ausführungsform ist der Spektralsensor ausgebildet, lediglich ein einzelnes Objekt von anderen zu unterscheiden. Diese Ausbildung des Spektralsensors kann zusätzlich oder alternativ zu den hierin beschriebenen Ausführungsformen sein. Auch in dieser Ausführungsform wird das erste Spektrum bevorzugt zunächst normalisiert. Danach können Paare von Intensitätswerten identifiziert werden, bei welchen sich das Spektrum möglichst stark unterscheidet. Der spektrale Abstand (d.h. der Abstand der Wellenlängen der beiden Intensitätswerte) wird dabei variiert. Für unterschiedliche spektrale Abstände wird nun der Betrag der Differenz der beiden Intensitätswerte berechnet. Anschließend werden nun die beiden Wellenlängen als Wellenlängen des zweiten Spektrums ausgewählt, bei welchen der Betrag der obigen Differenz maximal ist. Auf dieselbe Weise können z.B. bis zu fünf Wellenlängen-Paare ermittelt werden. Die weiteren Wellenlängen-Paare werden dann auch in das zweite Spektrum aufgenommen. Im Betriebsmodus werden dann nur noch die im zweiten Spektrum enthaltenen Wellenlängen-Paare gemessen.

Gemäß einer weiteren Ausführungsform ist der Spektralsensor ausgebildet, anhand der Messung des zweiten Spektrums eine Dicke und/oder eine Feuchtigkeit des gemessenen Objekts zu bestimmen. Die Dicke und/oder die Feuchtigkeit des Objekts können insbesondere aus charakteristischen Einbrüchen (d.h. niedrigen Intensitätswerten) im gemessenen Spektrum abgeleitet werden. Zudem kann die Dicke auch im Lernmodus dem Spektralsensor mitgeteilt werden, wodurch der Spektralsensor dann in die Lage versetzt wird, aus Charakteristika des gemessenen Spektrums auf die Dicke des Objekts zurückzuschließen. Insbesondere kann es im Lernmodus ausreichen, dem Spektralsensor für nur ein erfasstes Objekt dessen Dicke mitzuteilen. Für weitere Objekte mit anderer Dicke muss keine Messung im Lernmodus erfolgen, es kann ausreichen, dem Spektralsensor weitere mögliche Dicken mitzuteilen. Im Betriebsmodus kann der Spektralsensor dann das Objekt mit der entsprechenden Dicke anhand der ihm so zur Verfügung stehenden Informationen zu identifizieren.

Allgemein kann der Spektralsensor ausgebildet sein, anhand der Messung des zweiten Spektrums in dem gemessenen Objekt einen Materialanteil eines bestimmten Materials in einem Stoffgemisch zu bestimmen. Bei dem Materialanteil kann es sich z.B. um den Anteil von Wasser und dementsprechend um die Bestimmung der Feuchtigkeit handeln. Die Bestimmung des Materialanteils von anderen Stoffen, z.B. von Kunststoffen oder organischen Anteilen, ist aber ebenfalls möglich.

Weiterhin betrifft die Erfindung ein Verfahren zur Objekterkennung durch Nahinfrarotspektroskopie mittels eines Spektralsensors, wobei sich das Verfahren durch die Merkmale des Anspruchs 12 auszeichnet.

Zu dem erfindungsgemäßen Verfahren gelten die Aussagen für den erfindungsgemäßen Spektralsensor entsprechend, dies gilt insbesondere für Vorteile und Ausführungsformen.

Nachfolgend wird die Erfindung rein beispielhaft unter Bezugnahme auf die Zeichnungen beschrieben. Es zeigen:
**Fig. 1** einen Spektralsensor in schematischer Ansicht;
**Fig. 2** schematisch den Ablauf von Lernmodus und Betriebsmodus;
**Fig. 3** schematisch im Überblick die Schritte zur Bestimmung der Wellenlängen des zweiten Spektrums;
**Fig. 4** gemessene Intensitätswerte in einem ersten Spektrum für neun verschiedene Materialien;
**Fig. 5** die Intensitätswerte von Fig. 4 in normalisierter Form;
**Fig. 6** Hauptkomponenten und Ladungen nach einer ersten Hauptkomponentenanalyse der Werte von Fig. 3;
**Fig. 7** Ladungsdifferenzen und aus den Ladungsdifferenzen ausgewählte Wellenlängen;
**Fig. 8** normalisierte Intensitätswerte der ausgewählten Wellenlängen;
**Fig. 9** Hauptkomponenten und zugehörige Ladungen der normalisierten Wellenlängen von Fig. 8.

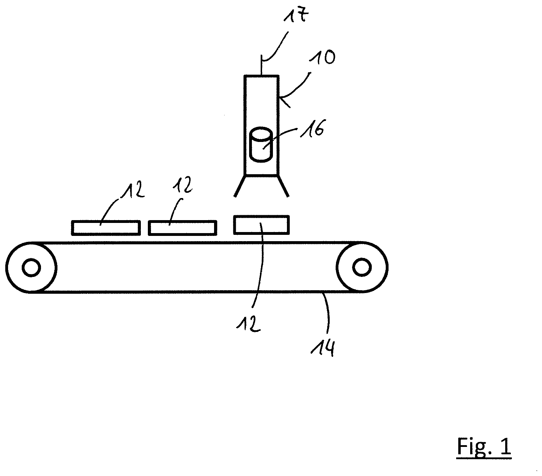

Fig. 1 zeigt einen Spektralsensor 10, welcher eine Lichtquelle zur Bestrahlung von Objekten 12 und einen Photosensor zur Auswertung des von den Objekten 12 rückgestrahlten Spektrums umfasst. Die Lichtquelle und der Photosensor sind in Fig. 1 nicht gezeigt.

Die Objekte 12 werden mittels eines Förderbands 14 innerhalb eines industriellen Prozesses bewegt und dem Spektralsensor 10 nacheinander präsentiert und vom Spektralsensor 10 gemessen.

Der Spektralsensor 10 umfasst eine Rechen- und Speichereinheit 16, welche den Betrieb des Spektralsensors 10 in einem Lernmodus und in einem Betriebsmodus gestattet, wie nachfolgend ausgeführt. Erkannte Objekte 12 können von dem Spektralsensor 10 über eine Datenschnittstelle 17 ausgegeben werden.

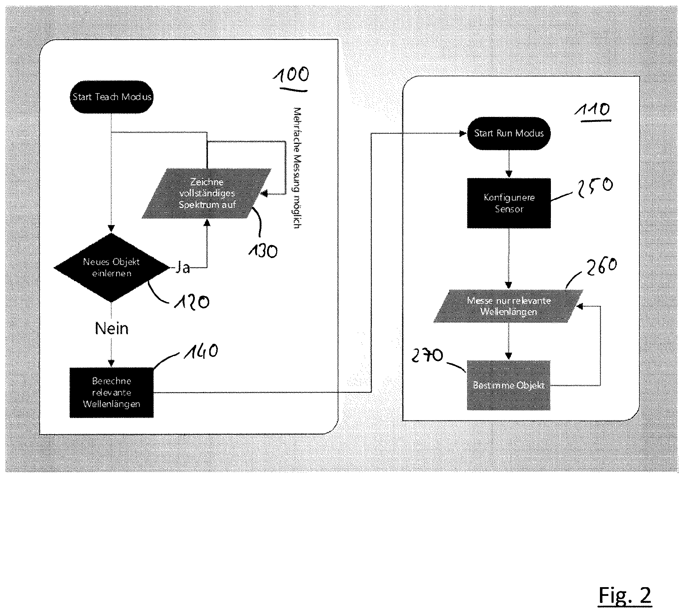

Fig. 2 zeigt die Abläufe im Lernmodus 100 und im Betriebsmodus 110. Im Lernmodus 100 wird zunächst im Schritt 120 erkannt, dass ein neues Objekt 12 eingelernt werden soll. Daraufhin wird im Schritt 130 ein vollständiges Spektrum, d.h. ein erstes Spektrum 18, mehrmals aufgezeichnet. Dieser Vorgang wird für mehrere neue Objekte 12 wiederholt, wobei die Objekte 12 im Lernmodus 100 grundsätzlich als bekannt angesehen werden.

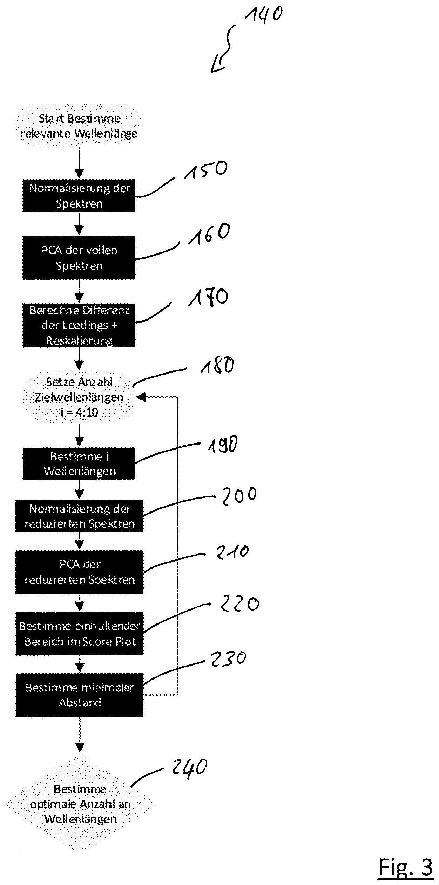

Soll kein neues Objekt 12 mehr eingelernt werden, werden im Schritt 140 die relevanten Wellenlängen, d.h. die Wellenlängen eines zweiten Spektrums 26, ausgewählt. Das genaue Vorgehen innerhalb des Schritts 140 ist in Fig. 3 gezeigt.

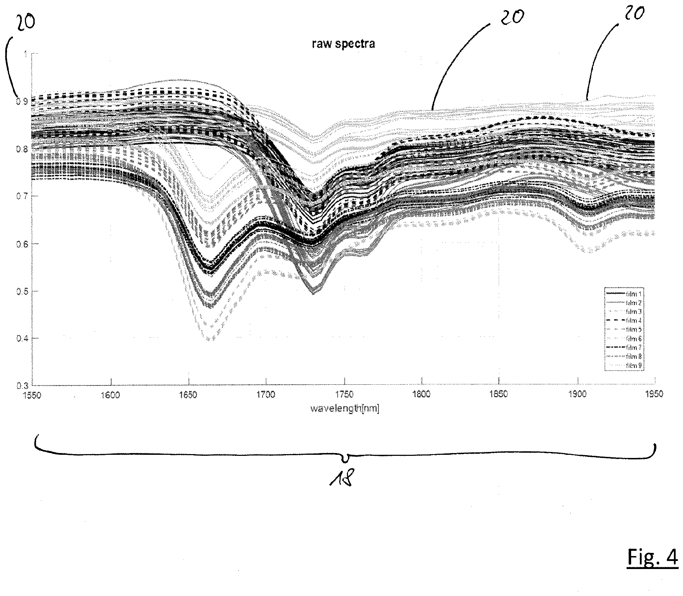

Fig. 3 zeigt die Auswahl der Wellenlängen für das zweite Spektrum 26. Die in Fig. 3 gezeigten Verfahrensschritte basieren auf den gemessenen Intensitätswerten des ersten Spektrums 18, wie sie im Schritt 130 aufgezeichnet wurden. Die gemessenen Intensitätswerte sind in Fig. 4 dargestellt und dort mit Bezugszeichen 20 bezeichnet. Die Intensitätswerte 20 wurden für neun transparente Folien aus unterschiedlichen Materialien jeweils mehrmals gemessen.

Die Intensitätswerte 20 sind entlang der y-Achse aufgetragen, wohingegen die Wellenlängen auf der x-Achse aufgetragen sind. Die gesamten auf der x-Achse aufgetragenen Wellenlängen von 1550 bis 1950 nm bilden das erste Spektrum 18.

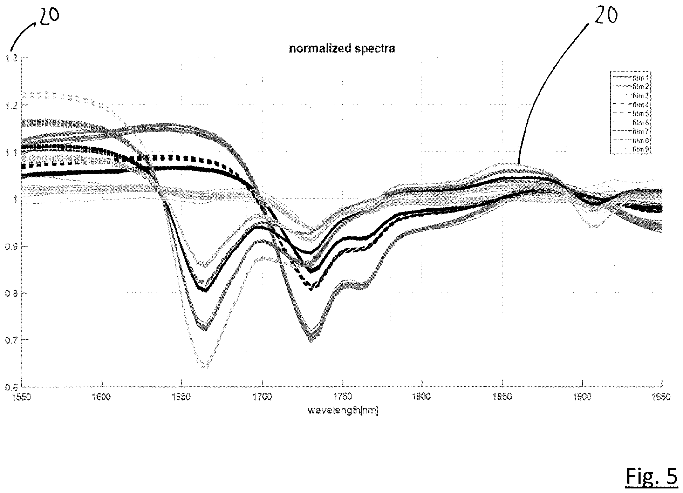

Die gemessenen Intensitätswerte 20 von Fig. 4 werden anschließend in Schritt 150 von Fig. 3 normalisiert, sodass der Mittelwert aller Intensitätswerte 20 "1" ist. Die sich so ergebenden Intensitätswerte 20 sind in Fig. 5 dargestellt.

Mit den in Fig. 5 dargestellten Intensitätswerten 20 wird gemäß Schritt 160 von Fig. 3 eine erste Hauptkomponentenanalyse (PCA) vorgenommen, bei welcher eine erste Hauptkomponente 22 und eine zweite Hauptkomponente 24 berechnet werden. Zu jeder Hauptkomponente 22, 24 werden noch erste und zweite Ladungen 28, 30 berechnet.

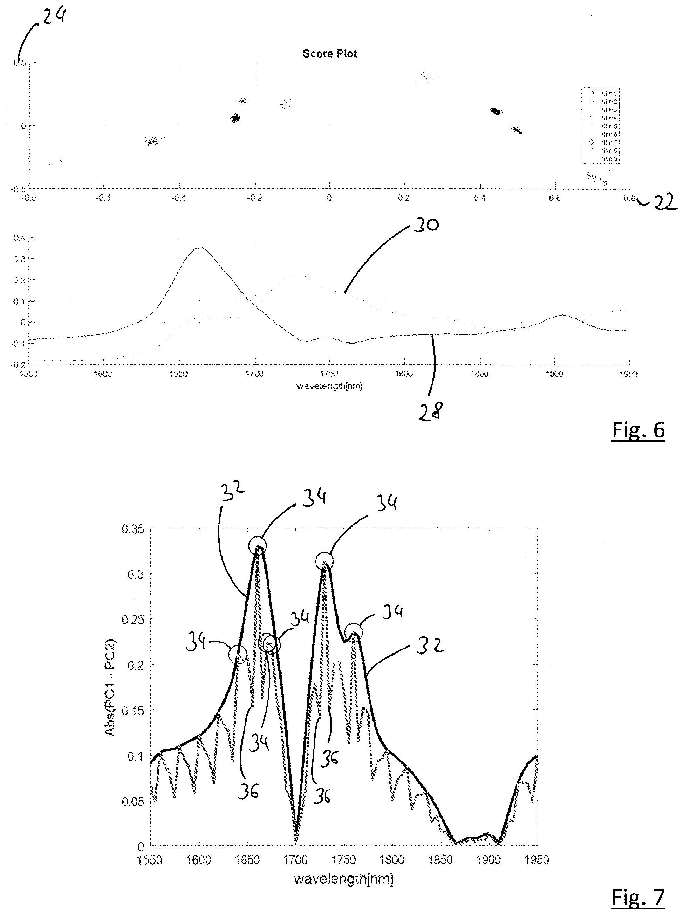

Die erste und zweite Hauptkomponente 22, 24 sind in Fig. 6 in einem Score Plot eingetragen, wobei die erste Hauptkomponente 22 entlang der x-Achse und die zweite Hauptkomponente 24 entlang der y-Achse eingetragen ist. Die Ladungen 28, 30 sind im unteren Teil von Fig. 6 dargestellt und für die jeweils zugehörige Wellenlänge angegeben. Die ersten Ladungen 28 gehören zu der ersten Hauptkomponente 22 und die zweiten Ladungen 30 zu der zweiten Hauptkomponente 24.

Anschließend wird in Schritt 170 von Fig. 3 der Betrag einer Ladungsdifferenz 32 (d.h. Betrag der Subtraktion von der ersten Ladung 28 bei einer Wellenlänge und der zweiten Ladung 30 bei derselben Wellenlänge) berechnet. Anschließend werden iterativ ausgewählte Wellenlängen 34 bestimmt, wobei Ladungsdifferenzen 32 von zu den ausgewählten Wellenlängen 34 benachbarten Wellenlängen erniedrigt werden. Durch das Erniedrigen ergeben sich erniedrigte Ladungsdifferenzen 36. Dies ist in Fig. 7 gezeigt, wobei dort als erste ausgewählte Wellenlänge 34 die Wellenlänge von etwa 1660 nm zu erkennen ist, welche die größte Ladungsdifferenz 32 aufweist. Die nachfolgenden ausgewählten Wellenlängen 34 werden jeweils auf den erniedrigten Ladungsdifferenzen 36 bestimmt.

Im Schritt 170 werden bevorzugt so viele ausgewählte Wellenlängen 34 bestimmt, wie maximal benötigt werden können, sodass der Schritt 170 nicht nochmals durchgeführt werden muss.

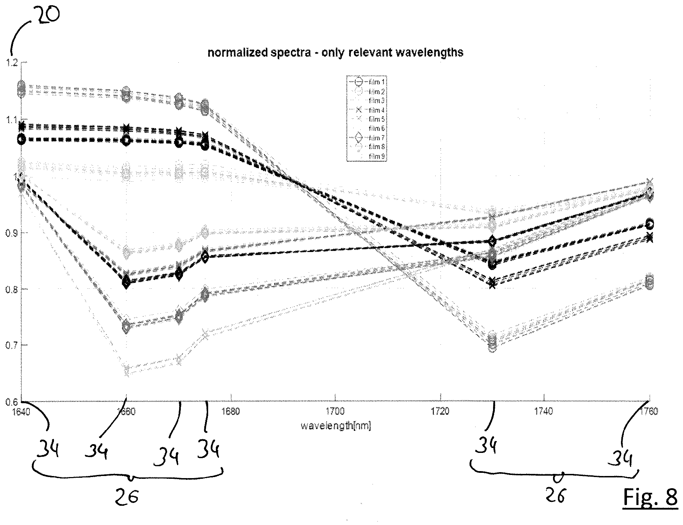

Anschließend wird im Schritt 180 von Fig. 3 die Anzahl der ausgewählten Wellenlängen 34 auf einen Wert (hier vier bis zehn) gesetzt, wobei in den Figuren mit jeweils sechs ausgewählte Wellenlängen 34 gezeigt sind. Die Anzahl der ausgewählten/verwendeten Wellenlängen 34 wird dann im Schritt 190 gesetzt, wobei die ausgewählten Wellenlängen 34 das zweite Spektrum 26 bilden. Daraufhin wird im Schritt 200 eine Normalisierung nur der Intensitätswerte 20 der ausgewählten Wellenlängen 34 (d.h. des zweiten Spektrums 26) vorgenommen. Die Normalisierung ist in Fig. 8 gezeigt.

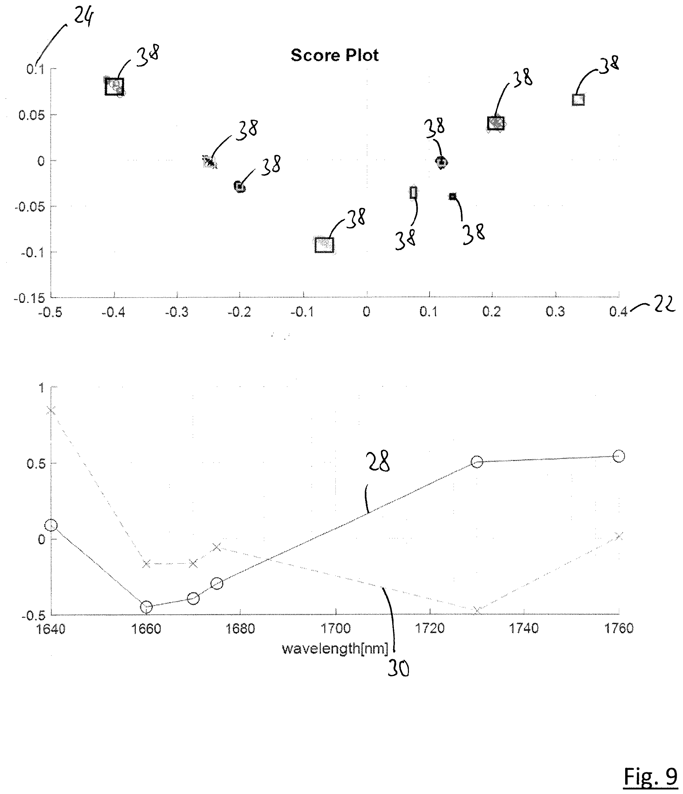

Auf dem normalisierten zweiten Spektrum 26, wie in Fig. 8 gezeigt, wird anschließend eine zweite Hauptkomponentenanalyse (Schritt 210 in Fig. 3) durchgeführt. Das Ergebnis der zweiten Hauptkomponentenanalyse ist in Fig. 9 dargestellt. Die Darstellung in Fig. 9 entspricht grundsätzlich der Darstellung von Fig. 6. In dem Score Plot von Fig. 9 werden zudem noch Einhüllende 38 für die neun verschiedenen Materialien ermittelt (Schritt 220 in Fig. 3). Die Einhüllenden 38 sind jeweils als Rechtecke ausgeführt.

Für die Einhüllenden 38 wird im Schritt 230 in Fig. 3 der minimale Abstand zwischen zwei Einhüllenden 38 bestimmt. Anschließend werden die Schritte 180 bis 230 wiederholt durchlaufen (für die Anzahl der ausgewählten Wellenlängen 34 von vier bis zehn). Nachdem für alle möglichen Anzahlen der ausgewählten Wellenlängen 34 der minimale Abstand zwischen den Einhüllenden 38 bestimmt wurde, wird die Anzahl an ausgewählten Wellenlängen 34 im Schritt 240 ausgewählt, bei welcher der minimale Abstand maximal wird.

Die so ausgewählten Wellenlängen 34 (d.h. das so bestimmte zweite Spektrum 26) werden dann in der Rechen- und Speichereinheit 16 abgespeichert. Tritt der Spektralsensor 10 nun in den Betriebsmodus 110 ein, so erfolgt eine Konfiguration im Schritt 250 von Fig. 2, bei welcher der Spektralsensor 10 die ausgewählten Wellenlängen 34 lädt. Hierdurch ist der Spektralsensor 10 dann derart konfiguriert, beim Messen im Schritt 260 nur die Wellenlängen des zweiten Spektrums 26 zu messen. Anschließend an die Messung 260 führt der Spektralsensor 10 die Schritte 200 und 210 von Fig. 3 aus.

Im Betriebsmodus 110 führt der Spektralsensor 10 also eine Normalisierung und anschließend eine Hauptkomponentenanalyse basierend nur auf dem zweiten Spektrum 26 aus. In dem Score Plot von Fig. 9 wird dadurch ein Punkt erhalten, welcher idealerweise innerhalb einer Einhüllenden 38 oder zumindest nahe an einer der Einhüllenden 38 liegt, sofern das im Betriebsmodus 110 gemessene Objekt aus einem Material besteht, welches eines der neun ursprünglich eingelernten Materialien ist. Das gemessene Objekt 12 wird dann als das Objekt oder Material bestimmt, zu welchem der erhaltene Punkt in dem Score Plot am nächsten liegt (Schritt 270 in Fig. 3).

Der Spektralsensor 10 kann daher im Betriebsmodus 110 schnell und mit geringem Messaufwand ein zuverlässiges und robustes Ergebnis über das gemessene Objekt 12 liefern.

### Bezugszeichenliste

10 Spektralsensor
12 Objekt
14 Förderband
16 Rechen- und Speichereinheit
17 Datenschnittstelle
18 erstes Spektrum
20 Intensitätswerte
22 erste Hauptkomponente
24 zweite Hauptkomponente
26 zweites Spektrum
28 erste Ladung
30 zweite Ladung
32 Ladungsdifferenz
34 ausgewählte Wellenlänge
36 erniedrigte Ladungsdifferenz
38 Einhüllende
100 Lernmodus
110 Betriebsmodus
120 neues Objekt ein lernen
130 erstes Spektrum messen
140 Auswahl der Wellenlängen des zweiten Spektrums
150 Normalisierung des ersten Spektrums
160 erste Hauptkomponentenanalyse
170 Ladungsdifferenz bilden und Wellenlängen auswählen
180 Wellenlängen setzen
190 Wellenlängen bestimmen
200 Normalisierung des zweiten Spektrums
210 zweite Hauptkomponentenanalyse
220 Bestimmung der Einhüllenden
230 Berechnung des minimalen Abstands
240 Bestimmung der optimalen Anzahl von Wellenlängen
250 Konfiguration
260 Messung
270 Objektbestimmung

## Patentansprüche

1. Spektralsensor (10) für die Nahinfrarotspektroskopie, welcher zur Unterscheidung und/oder Erkennung von Objekten (12) und/oder Materialien dient, wobei der Spektralsensor (10) eine Rechen- und Speichereinheit (16) umfasst und ausgebildet ist, in einem Lernmodus (100) und in einem Betriebsmodus (110) zu arbeiten, wobei
der Spektralsensor (10) ausgebildet ist, in dem Lernmodus (100) ein oder mehrere Messungen von Intensitätswerten (20) eines ersten Spektrums (18) von Wellenlängen und in dem Betriebsmodus (110) zumindest eine Messung von Intensitätswerten (20) eines zweiten Spektrums (26) von Wellenlängen durchzuführen, wobei das zweite Spektrum (26) vollständig in dem ersten Spektrum (18) enthalten ist aber weniger Wellenlängen umfasst, als das erste Spektrum,
wobei der Spektralsensor (10) ausgebildet ist, selbst die Wellenlängen des zweiten Spektrums (26) mittels einer ersten Hauptkomponentenanalyse (160) der Messungen des ersten Spektrums (18) zu bestimmen und bei der ersten Hauptkomponentenanalyse (160) zwei Hauptkomponenten (22, 24) sowie die den Hauptkomponenten (22, 24) zugehörigen ersten und zweiten Ladungen (28, 30) zu berechnen;
**dadurch gekennzeichnet, dass**
der Spektralsensor (10) ferner ausgebildet ist,
- für jede Wellenlänge des ersten Spektrums (18) eine Ladungsdifferenz (32) als die Differenz der ersten und zweiten Ladung (28, 30) derselben Wellenlänge zu berechnen, und
- für das zweite Spektrum (26) diejenigen Wellenlängen auszuwählen, welche die größte Ladungsdifferenz aufweisen, wozu der Spektralsensor (10) ausgebildet ist,
- (a) die Anzahl von auszuwählenden Wellenlängen festzulegen,
- (b) bei der Auswahl der Wellenlängen für das zweite Spektrum (26) zunächst die Wellenlänge (34) mit der größten Ladungsdifferenz (32) auszuwählen und anschließend Ladungsdifferenzen von benachbart zu der ausgewählten Wellenlänge liegenden Wellenlängen zu erniedrigen, und
- (c) anschließend, basierend auf den erniedrigten Ladungsdifferenzen (36), eine weitere Wellenlänge mit der dann größten Ladungsdifferenz (36) auszuwählen und anschließend Ladungsdifferenzen von benachbart zu der weiteren ausgewählten Wellenlänge (34) liegenden Wellenlängen zu erniedrigen;
wobei die Recheneinheit (16) eingerichtet ist, um die für die Bestimmung der Wellenlängen des zweiten Spektrums (26) notwendigen Schritte auszuführen.

2. Spektralsensor (10) nach Anspruch 1,
wobei der Spektralsensor (10) ausgebildet ist, im Lernmodus (100) bekannte Objekte (12) zu messen und aus den Messungen der bekannten Objekte (12) das zweite Spektrum (26) zu bestimmen.

3. Spektralsensor (10) nach Anspruch 2,
wobei der Spektralsensor (10) ausgebildet ist, im Betriebsmodus (110) mittels der Detektion des zweiten Spektrums (26) unbekannte Objekte (12) als eines der im Lernmodus (100) gemessenen Objekte (12) zu erkennen.

4. Spektralsensor (10) nach einem der vorstehenden Ansprüche,
wobei der Spektralsensor (10) ausgebildet ist, für das erste Spektrum (18) zumindest 5 Mal, bevorzugt 10 oder 50 Mal, mehr Wellenlängen zu detektieren, als für das zweite Spektrum (26).

5. Spektralsensor (10) nach einem der vorstehenden Ansprüche,
wobei das zweite Spektrum (26) lediglich zwischen 3 und 15, bevorzugt zwischen 4 und 10 verschiedene Wellenlängen umfasst.

6. Spektralsensor (10) nach Anspruch 1,
wobei der Spektralsensor (10) ausgebildet ist, vor der ersten Hauptkomponentenanalyse (160) eine Normalisierung der Intensitätswerte (20) der Messungen des ersten Spektrums (18) vorzunehmen.

7. Spektralsensor (10) nach Anspruch 1,
wobei der Spektralsensor (10) ausgebildet ist,
nach dem Auswählen der Wellenlängen nur auf den Messwerten der ausgewählten Wellenlängen (34) eine Normalisierung (200) und/oder anschließend eine zweite Hauptkomponentenanalyse (210) vorzunehmen, bei welcher für jede Messung im Lernmodus (100) die Hauptkomponenten (22, 24) und die zugehörigen Ladungen (28, 30) ermittelt werden.

8. Spektralsensor (10) nach Anspruch 7,
wobei der Spektralsensor (10) ausgebildet ist,
die bei der zweiten Hauptkomponentenanalyse (210) ermittelten Hauptkomponenten (22, 24) für Messungen desselben bekannten Objekts zu gruppieren und eine Einhüllende (38) der jeweils gruppierten Hauptkomponenten (22, 24) zu bestimmen.

9. Spektralsensor (10) nach Anspruch 8,
wobei der Spektralsensor (10) ausgebildet ist,
den Abstand der Einhüllenden (38) für verschiedene Anzahlen von ausgewählten Wellenlängen (34) zu berechnen,
wobei die Einhüllenden (38) mit dem größten Abstand abgespeichert und im Betriebsmodus (110) dazu verwendet werden, ein zunächst unbekanntes Objekt (12) zu erkennen.

10. Spektralsensor (10) nach einem der vorstehenden Ansprüche,
wobei der Spektralsensor (10) ausgebildet ist, die Wellenlängen des zweiten Spektrums (26) unter Zuhilfenahme eines Maschinenlernverfahrens auszuwählen.

11. Spektralsensor (10) nach einem der vorstehenden Ansprüche,
wobei der Spektralsensor (10) ausgebildet ist, anhand der Messung des zweiten Spektrums (26) eine Dicke und/oder eine Feuchtigkeit des gemessenen Objekts (12) zu bestimmen.

12. Verfahren zur Objekterkennung durch Nahinfrarotspektroskopie mittels eines Spektralsensors (10) gemäß nach einem der vorstehenden Ansprüche, wobei
- in einem Lernmodus (100) ein oder mehrere Messungen von Intensitätswerten (20) eines ersten Spektrums (18) von Wellenlängen durchgeführt werden und
- in einem Betriebsmodus (110) zumindest eine Messung von Intensitätswerten (20) eines zweiten Spektrums (26) von Wellenlängen durchgeführt wird, wobei das zweite Spektrum (26) vollständig in dem ersten Spektrum (18) enthalten ist aber weniger Wellenlängen umfasst, als das erste Spektrum (18),
wobei der Spektralsensor (10) selbst die Wellenlängen des zweiten Spektrums (26) mittels einer ersten Hauptkomponentenanalyse (160) der Messungen des ersten Spektrums (18) bestimmt und bei der ersten Hauptkomponentenanalyse (160) zwei Hauptkomponenten (22, 24) sowie die den Hauptkomponenten (22, 24) zugehörigen ersten und zweiten Ladungen (28, 30) berechnet;
**dadurch gekennzeichnet, dass**
der Spektralsensor (10) ferner
- für jede Wellenlänge des ersten Spektrums (18) eine Ladungsdifferenz (32) als die Differenz der ersten und zweiten Ladung (28, 30) derselben Wellenlänge berechnet, und
- für das zweite Spektrum (26) diejenigen Wellenlängen auswählt, welche die größte Ladungsdifferenz aufweisen, wozu der Spektralsensor (10),
- (a) die Anzahl von auszuwählenden Wellenlängen festlegt,
- (b) bei der Auswahl der Wellenlängen für das zweite Spektrum (26) zunächst die Wellenlänge (34) mit der größten Ladungsdifferenz (32) auswählt und anschließend Ladungsdifferenzen von benachbart zu der ausgewählten Wellenlänge liegenden Wellenlängen erniedrigt, und
- (c) anschließend, basierend auf den erniedrigten Ladungsdifferenzen (36), eine weitere Wellenlänge mit der dann größten Ladungsdifferenz (36) auswählt und anschließend Ladungsdifferenzen von benachbart zu der weiteren ausgewählten Wellenlänge (34) liegenden Wellenlängen erniedrigt.

## Claims

1. A spectral sensor (10) for near-infrared spectroscopy, which is used for distinguishing and/or recognizing objects (12) and/or materials, wherein the spectral sensor (10) comprises a computing and memory unit (16) and is configured to operate in a learning mode (100) and in an operating mode (110), wherein
the spectral sensor (10) is configured to perform one or more measurements of intensity values (20) of a first spectrum (18) of wavelengths in the learning mode (100) and at least one measurement of intensity values (20) of a second spectrum (26) of wavelengths in the operating mode (110), wherein the second spectrum (26) is fully included in the first spectrum (18) but comprises fewer wavelengths than the first spectrum,
wherein the spectral sensor (10) is configured to itself determine the wavelengths of the second spectrum (26) by means of a first principal component analysis (160) of the measurements of the first spectrum (18) and, in the first principal component analysis (160), to calculate two principal components (22, 24) as well as the first and second charges (28, 30) associated with the principal components (22, 24),
**characterized in that**
the spectral sensor (10) is further configured
- to calculate a charge difference (32) for each wavelength of the first spectrum (18) as the difference of the first and second charges (28, 30) of the same wavelength, and
- to select those wavelengths for the second spectrum (26) which have the largest charge difference, for which purpose the spectral sensor (10) is configured
- (a) to define the number of wavelengths to be selected,
- (b) when selecting the wavelengths for the second spectrum (26), first to select the wavelength (34) having the largest charge difference (32) and then to decrease charge differences of wavelengths adjacent to the selected wavelength, and
- (c) subsequently, based on the decreased charge differences (36), to select a further wavelength having the then largest charge difference (36) and then to decrease charge differences of wavelengths adjacent to the further selected wavelength (34),
wherein the computing unit (16) is adapted to perform the steps necessary for determining the wavelengths of the second spectrum (26).

2. A spectral sensor (10) in accordance with claim 1,
wherein the spectral sensor (10) is configured to measure known objects (12) in the learning mode (100) and to determine the second spectrum (26) from the measurements of the known objects (12).

3. A spectral sensor (10) in accordance with claim 2,
wherein the spectral sensor (10) is configured to recognize, by means of the detection of the second spectrum (26), unknown objects (12) in the operating mode (110) as one of the objects (12) measured in the learning mode (100).

4. A spectral sensor (10) in accordance with any one of the preceding claims, wherein the spectral sensor (10) is configured to detect at least 5 times, preferably 10 or 50 times, more wavelengths for the first spectrum (18) than for the second spectrum (26).

5. A spectral sensor (10) in accordance with any one of the preceding claims, wherein the second spectrum (26) comprises only between 3 and 15, preferably between 4 and 10, different wavelengths.

6. A spectral sensor (10) in accordance with claim 1,
wherein the spectral sensor (10) is configured to perform a normalization of the intensity values (20) of the measurements of the first spectrum (18) prior to the first principal component analysis (160).

7. A spectral sensor (10) in accordance with claim 1,
wherein the spectral sensor (10) is configured,
after selecting the wavelengths, to perform a normalization (200) only on the measured values of the selected wavelengths (34) and/or subsequently to perform a second principal component analysis (210) in which the principal components (22, 24) and the associated charges (28, 30) are determined for each measurement in the learning mode (100).

8. A spectral sensor (10) in accordance with claim 7,
wherein the spectral sensor (10) is configured
to group the principal components (22, 24) determined in the second principal component analysis (210) for measurements of the same known object and to determine an envelope (38) of the respective grouped principal components (22, 24).

9. A spectral sensor (10) in accordance with claim 8,
wherein the spectral sensor (10) is configured
to calculate the distance of the envelopes (38) for different numbers of selected wavelengths (34),
wherein the envelopes (38) having the largest distance are stored and are used in the operating mode (110) to recognize an initially unknown object (12).

10. A spectral sensor (10) in accordance with any one of the preceding claims, wherein the spectral sensor (10) is configured to select the wavelengths of the second spectrum (26) with the aid of a machine learning method.

11. A spectral sensor (10) in accordance with any one of the preceding claims, wherein the spectral sensor (10) is configured to determine a thickness and/or a moisture of the measured object (12) based on the measurement of the second spectrum (26).

12. A method for object recognition by near-infrared spectroscopy by means of a spectral sensor (10) in accordance with any one of the preceding claims, wherein
- one or more measurements of intensity values (20) of a first spectrum (18) of wavelengths are performed in a learning mode (100), and
- at least one measurement of intensity values (20) of a second spectrum (26) of wavelengths is performed in an operating mode (110), wherein the second spectrum (26) is fully included in the first spectrum (18) but comprises fewer wavelengths than the first spectrum (18),
wherein the spectral sensor (10) itself determines the wavelengths of the second spectrum (26) by means of a first principal component analysis (160) of the measurements of the first spectrum (18) and, in the first principal component analysis (160), calculates two principal components (22, 24) as well as the first and second charges (28, 30) associated with the principal components (22, 24),
**characterized in that**
the spectral sensor (10) further
- calculates a charge difference (32) for each wavelength of the first spectrum (18) as the difference of the first and second charges (28, 30) of the same wavelength, and
- selects those wavelengths for the second spectrum (26) which have the largest charge difference, for which purpose the spectral sensor (10)
- (a) defines the number of wavelengths to be selected,
- (b) when selecting the wavelengths for the second spectrum (26), first selects the wavelength (34) having the largest charge difference (32) and then decreases charge differences of wavelengths adjacent to the selected wavelength, and
- (c) subsequently, based on the decreased charge differences (36), selects a further wavelength having the then largest charge difference (36) and then decreases charge differences of wavelengths adjacent to the further selected wavelength (34).

## Revendications

1. Capteur spectral (10) pour la spectroscopie proche infrarouge, qui sert à distinguer et/ou à reconnaître des objets (12) et/ou des matériaux, le capteur spectral (10) comprenant une unité de calcul et de stockage (16) et étant conçu pour fonctionner dans un mode d'apprentissage (100) et dans un mode de fonctionnement (110),
dans lequel
le capteur spectral (10) est conçu pour effectuer, dans le mode d'apprentissage (100), une ou plusieurs mesures de valeurs d'intensité (20) d'un premier spectre (18) de longueurs d'onde et, dans le mode de fonctionnement (110), au moins une mesure de valeurs d'intensité (20) d'un deuxième spectre (26) de longueurs d'onde, le deuxième spectre (26) étant entièrement contenu dans le premier spectre (18) mais comprenant moins de longueurs d'onde que le premier spectre,
le capteur spectral (10) est conçu pour déterminer lui-même les longueurs d'onde du deuxième spectre (26) au moyen d'une première analyse de composantes principales (160) des mesures du premier spectre (18) et pour calculer, lors de la première analyse de composantes principales (160), deux composantes principales (22, 24) ainsi que les premières et deuxièmes charges (28, 30) associées aux composantes principales (22, 24) ;
**caractérisé en ce que**
le capteur spectral (10) est en outre conçu pour
- calculer, pour chaque longueur d'onde du premier spectre (18), une différence de charge (32) en tant que différence entre la première et la deuxième charge (28, 30) de la même longueur d'onde, et
- sélectionner, pour le deuxième spectre (26), les longueurs d'onde qui présentent la plus grande différence de charge,
ce pourquoi le capteur spectral (10) est conçu pour
- (a) déterminer le nombre de longueurs d'onde à sélectionner,
- (b) lors de la sélection des longueurs d'onde pour le deuxième spectre (26), sélectionner d'abord la longueur d'onde (34) avec la plus grande différence de charge (32) et ensuite abaisser les différences de charge des longueurs d'onde adjacentes à la longueur d'onde sélectionnée, et
- (c) sélectionner ensuite, sur la base des différences de charge abaissées (36), une autre longueur d'onde ayant alors la plus grande différence de charge (36), et abaisser ensuite les différences de charge des longueurs d'onde adjacentes à l'autre longueur d'onde sélectionnée (34) ;
l'unité de calcul (16) étant conçue pour effectuer les étapes nécessaires à déterminer les longueurs d'onde du deuxième spectre (26).

2. Capteur spectral (10) selon la revendication 1,
le capteur spectral (10) étant conçu pour mesurer, en mode d'apprentissage (100), des objets connus (12) et pour déterminer le deuxième spectre (26) à partir des mesures des objets connus (12).

3. Capteur spectral (10) selon la revendication 2,
le capteur spectral (10) étant conçu pour reconnaître, en mode de fonctionnement (110), au moyen de la détection du deuxième spectre (26), des objets inconnus (12) comme l'un des objets (12) mesurés en mode d'apprentissage (100).

4. Capteur spectral (10) selon l'une des revendications précédentes,
le capteur spectral (10) étant conçu pour détecter au moins 5 fois, de préférence 10 ou 50 fois, plus de longueurs d'onde pour le premier spectre (18) que pour le deuxième spectre (26).

5. Capteur spectral (10) selon l'une des revendications précédentes,
dans lequel le deuxième spectre (26) comprend seulement entre 3 et 15, de préférence entre 4 et 10 longueurs d'onde différentes.

6. Capteur spectral (10) selon la revendication 1,
le capteur spectral (10) étant conçu pour effectuer, avant la première analyse des composantes principales (160), une normalisation des valeurs d'intensité (20) des mesures du premier spectre (18).

7. Capteur spectral (10) selon la revendication 1,
le capteur spectral (10) étant conçu pour
après la sélection des longueurs d'onde, effectuer une normalisation (200) uniquement sur les valeurs de mesure des longueurs d'onde sélectionnées (34), et/ou ensuite effectuer une deuxième analyse des composantes principales (210), lors de laquelle les composantes principales (22, 24) et les charges correspondantes (28, 30) sont déterminées pour chaque mesure en mode d'apprentissage (100).

8. Capteur spectral (10) selon la revendication 7,
le capteur spectral (10) étant conçu pour
regrouper les composantes principales (22, 24) déterminées lors de la deuxième analyse des composantes principales (210) pour des mesures du même objet connu, et
déterminer une enveloppante (38) des composantes principales (22, 24) respectives regroupées.

9. Capteur spectral (10) selon la revendication 8,
le capteur spectral (10) étant conçu pour
calculer la distance des enveloppantes (38) pour différents nombres de longueurs d'onde sélectionnées (34),
les enveloppantes (38) avec la plus grande distance étant mémorisées et utilisées en mode de fonctionnement (110) pour reconnaître un objet (12) initialement inconnu.

10. Capteur spectral (10) selon l'une des revendications précédentes,
le capteur spectral (10) étant conçu pour sélectionner les longueurs d'onde du deuxième spectre (26) à l'aide d'un procédé d'apprentissage automatique.

11. Capteur spectral (10) selon l'une des revendications précédentes,
le capteur spectral (10) étant conçu pour déterminer, à l'aide de la mesure du deuxième spectre (26), une épaisseur et/ou une humidité de l'objet (12) mesuré.

12. Procédé de reconnaissance d'objets par spectroscopie proche infrarouge au moyen d'un capteur spectral (10) selon l'une des revendications précédentes, dans lequel
- dans un mode d'apprentissage (100), une ou plusieurs mesures de valeurs d'intensité (20) d'un premier spectre (18) de longueurs d'onde sont effectuées, et
- dans un mode de fonctionnement (110), au moins une mesure de valeurs d'intensité (20) d'un deuxième spectre (26) de longueurs d'onde est effectuée, le deuxième spectre (26) étant entièrement contenu dans le premier spectre (18) mais comprenant moins de longueurs d'onde que le premier spectre (18),
le capteur spectral (10) détermine lui-même les longueurs d'onde du deuxième spectre (26) au moyen d'une première analyse des composantes principales (160) des mesures du premier spectre (18), et calcule, lors de la première analyse des composantes principales (160), deux composantes principales (22, 24) ainsi que les premières et deuxièmes charges (28, 30) associées aux composantes principales (22, 24) ;
**caractérisé en ce que**
le capteur spectral (10) est en outre conçu pour
- calculer, pour chaque longueur d'onde du premier spectre (18), une différence de charge (32) en tant que différence entre la première et la deuxième charge (28, 30) de la même longueur d'onde, et
- sélectionner, pour le deuxième spectre (26), les longueurs d'onde qui présentent la plus grande différence de charge,
ce pourquoi le capteur spectral (10) est conçu pour
- (a) déterminer le nombre de longueurs d'onde à sélectionner,
- (b) lors de la sélection des longueurs d'onde pour le deuxième spectre (26), sélectionner d'abord la longueur d'onde (34) avec la plus grande différence de charge (32), et ensuite abaisser les différences de charge des longueurs d'onde adjacentes à la longueur d'onde sélectionnée, et
- (c) sélectionner ensuite, sur la base des différences de charge abaissées (36), une autre longueur d'onde ayant alors la plus grande différence de charge (36), et abaisser ensuite les différences de charge des longueurs d'onde adjacentes à l'autre longueur d'onde sélectionnée (34).
